# EUROPÄISCHE PATENTANMELDUNG

(11) **EP 3 764 311 A1**
(43) Veröffentlichungstag der Anmeldung: **13.01.2021**
(21) Anmeldenummer: 19184932.2
(22) Anmeldetag: 08.07.2019
(51) Int. Cl.: G06Q 50/06, G06Q 10/06

(54) **VERFAHREN ZUR PLANUNG EINES ELEKTRISCHEN ENERGIEÜBERTRAGUNGSNETZES, PLANUNGSANORDNUNG UND COMPUTERPROGRAMMPRODUKT**

(71) Anmelder: Siemens Aktiengesellschaft, 80333 München (DE)
(72) Erfinder: Becher, Silvio, 81827 München (DE); Beyer, Dagmar, 80339 München (DE); Dauer, Maximilian, 93197 Zeitlarn (DE); Romeis, Christian, 91052 Erlangen (DE); Rümmele, Nataliia, 81739 München (DE)

(57) **Zusammenfassung**

Gegenstand der vorliegenden Erfindung ist ein Verfahren zur Planung eines elektrischen Energieübertragungsnetzes mittels einer Planungsanordnung, gekennzeichnet durch die Schritte:
- Bereitstellen eines ersten Eingangsdatensatzes (39,60,61), und
- Umwandeln des ersten Eingangsdatensatzes (39,60,61) in eine graphische Repräsentation (50) mittels einer Umwandlungseinrichtung, wobei die graphische Repräsentation (50) Topologieinformationen zur Verschaltung von Betriebsmitteln (3,4,5,6,7,8,9,30-32,34,36-38), und Datenkommunikationsinformationen der Betriebsmittel (3,4,5,6,7,8,9,30-32,34,36-38) und Parametrierungsinformationen der Betriebsmittel (3,4,5,6,7,8,9,30-32,34,36-38) beinhaltet, wobei unterschiedliche Betriebsmitteltypen durch eine erste Kennzeichnung (SS1,SS2,CB,CT,VT,L,IED) unterscheidbar sind, und elektrische Verbindungen durch eine zweite Kennzeichnung (12) unterscheidbar sind, und Datenkommunikationsverbindungen durch eine dritte Kennzeichnung (11) unterscheidbar sind,
- Identifizieren von mehrfach auftretenden Mustern (52,53, 69,70,71,72,74,77) in der graphischen Repräsentation (50) mittels einer Mustererkennungseinrichtung, und
- Ermitteln der jeweiligen Häufigkeit der Muster mittels der Mustererkennungseinrichtung, und
- Markieren aller Muster, deren jeweilige Häufigkeit einen vorher festgelegten Schwellenwert überschreitet, als Kandidatenmuster mittels der Mustererkennungseinrichtung, und
- Auswählen von typischen Konfigurationen (54,70,79,85) aus den Kandidatenmustern unter Berücksichtigung mindestens eines Auswahlkriteriums.

Ferner sind Gegenstände der Erfindung eine Planungsanordnung und ein Computerprogrammprodukt.

## Beschreibung

Die Erfindung betrifft ein Verfahren zur Planung eines elektrischen Energieübertragungsnetzes gemäß Anspruch 1, eine Planungsanordnung gemäß Anspruch 14 und ein Computerprogrammprodukt gemäß Anspruch 16.

Aus der Produktbroschüre "PSS E, High-performance Transmission Planning and Operations Software for the Power Industry", Siemens AG 2017, Article Number: EMDG-B10125-00-7600--PSSE Brochure ist eine Planungssoftware für Energieübertragungsnetze bekannt. Ergänzend wird häufig eine aus der Produktbroschüre "PSS SINCAL - All-in-one Simulation Software for the Analysis and Planning of Power Networks", Siemens AG 2018, Article Number: EMDG-B90038-00-7600--PSSSINCAL Brochure, bekannte Software eingesetzt. Um ein Energienetz zu planen und die Planung in einem realen Netz umzusetzen, sind aber aufgrund der Komplexität der Vernetzung vieler Betriebsmittel bisher viele manuelle Schritte durch Netzplanungsexperten erforderlich. Eine typische Vorgehensweise wird in dem Flyer "Planung von Übertragungsnetzen - Ein Fundus von Wissen für Ihre Energieanlagen" der Siemens AG 2018 erörtert.

Ausgehend von bekannten Verfahren zur Planung von Energieübertragungsnetzen stellt sich an die Erfindung die Aufgabe, ein Verfahren anzugeben, mit dem die Planung mit vergleichsweise geringerem Aufwand und schneller durchführbar ist.

Die Erfindung löst diese Aufgabe durch ein Verfahren gemäß Anspruch 1.

Die Erfindung macht es sich zu Nutze, dass Energienetze stets wiederkehrende Setups bzw. typische Konfigurationen aufweisen, in denen bestimmte Betriebsmittel auf gleiche Weise verschaltet und parametriert werden. Bisher werden solche typischen Konfigurationen, wenn überhaupt, manuell durch einen Experten identifiziert und zur Planung eines Energienetzes genutzt. Beispielsweise erkennt ein Experte eine häufig vorkommende Konstellation aus Betriebsmitteln und parametriert ein Schutzgerät entsprechend seines Erfahrungswissens. Hinzu kommen ggf. Simulationen im Hinblick auf die Systemstabilität und das Verhalten des geplanten Energieübertragungsnetzes in einem Fehlerfall. Wird hierbei eine problematische Situation festgestellt, so muss der Experte seine Netzplanung manuell anpassen und erneut einen Test in der Simulation durchführen.

Die Erfindung schlägt stattdessen vor, ein elektrisches Energieübertragungsnetz graphisch zu repräsentieren, um die Topologie, d.h. die Verschaltung der Betriebsmittel wie Leistungsschalter, Spannungswandler, Stromwandler, "Intelligent Electronic Devices" usw. abzubilden. Es werden also sowohl Primärtechnik als auch Sekundärtechnik abgebildet. Hinterlegt werden außerdem Parametrierungsinformationen und Kommunikationswege. Dieser Eingangsdatensatz kann mittels der graphischen Repräsentation analysiert werden. Betriebsmittel sind dabei als Knoten; Kommunikationswege und elektrische Verbindungen (und ggf. logische Zugehörigkeiten) und sind als Kanten dargestellt.

Die unterschiedlichen Betriebsmittel bzw. Knoten sind dabei durch eine erste Kennzeichnung unterscheidbar dargestellt. Die erste Kennzeichnung kann beispielsweise den Typ des Betriebsmittels angeben, also z.B. einen Leistungsschalter kennzeichnen. Auch die Kanten sind durch weitere Kennzeichnungen unterscheidbar, so dass eine Kommunikationsverbindung (z.B. ein IED - "intelligent electronic device" sendet Daten an ein weiteres IED) von z.B. einer logischen Zugehörigkeit (ein IED weist verschiedene Funktionen auf) oder einer elektrischen Verbindung (zwei Betriebsmittel sind durch eine elektrische Leitung z.B. für Mittelspannung verbunden) unterschieden werden kann.

Mithilfe der aufgefundenen typischen Konfigurationen können auf einfache Weise neue Energieübertragungsnetze geplant werden, indem mit den typischen Konfigurationen bereits erprobte Konfigurationen von Betriebsmitteln wiederverwendet werden. Dies reduziert den Planungs- und ggf. Simulationsaufwand bei der Netzplanung enorm. Erstmals werden durch diesen Ansatz historische Daten bzw. Erfahrungen in der Netzplanung systematisch und automatisiert für neue Projekte nutzbar gemacht.

Ein weiterer Anwendungsfall besteht darin, ein bestehendes Energieübertragungsnetz graphisch zu repräsentieren und anhand bekannter typischer Konfigurationen eine Optimierung der Verschaltung und/oder Parametrierung der Betriebsmittel im Netz vorzuschlagen bzw. diese Optimierung dann auch im Netz zu implementieren. Beispielsweise kann die Optimierung das Ziel haben, vorhandene Primärtechnik maximal auszulasten und gleichzeitig eine n-1 Sicherheit zu gewährleisten. Eine n-1 Sicherheit ist dann gegeben, wenn auch bei Ausfall eines einzelnen wichtigen Betriebsmittels kein Totalausfall des Energieübertragungsnetzes eintritt. Ein solches erfindungsgemäßes Verfahren kann beispielsweise direkt in einer Netzleitstelle (beispielsweise ein SCADA - "supervisory control and data aquisition" System wie z.B. Spectrum Power der Siemens AG) eingesetzt werden. Auch ein Einsatz in Softwaretools zur automatisierten Netzplanung ist vorteilhaft.

Parametrierungsinformationen sind beispielsweise Auslöseschwellenwerte für Schutzgeräte und sog. Interlocking-Regeln. Datenkommunikationsinformationen sind z.B. Angaben zur Datenkommunikation, d.h. an welche Geräte mit welchem Kommunikationsstandard bei welchen Ereignissen bzw. in welchen Zeittakt zu kommunizieren ist. Im Falle verschlüsselter Kommunikation sind auch entsprechende Verschlüsselungsinformationen parametriert.

Die Planungsanordnung weist eine Reihe von Einrichtungen wie z.B. die Umwandlungseinrichtung und die Mustererkennungseinrichtung auf. Diese Einrichtungen sind wie auch die Planungsanordnung beispielsweise als Rechner oder Rechnerkomponenten in einem Computernetzwerk ausgebildet. Das Netzwerk kann beispielsweise das Internet oder ein LAN (local area network) sein. Es kann sich bei der Planungsanordnung jedoch auch um eine Cloud Applikation handeln, bei der die einzelnen Einrichtungen als Softwaremodule ausgestaltet sind. Eine Cloud im Sinne der Erfindung ist eine verteilte Rechner- und Datenbankarchitektur, die Datenspeicher und Prozessormittel als Ressourcen an verschiedenen Orten mittels eines Datennetzwerks wie des Internets nutzbar macht.

In einer bevorzugten Ausführungsform des erfindungsgemäßen Verfahrens wird eine Auswahleinrichtung zur Auswahl von typischen Konfigurationen verwendet. Beispielsweise kann dies automatisiert durch eine Software erfolgen, die anhand des Auswahlkriteriums besonders relevante typischen Konfigurationen für eine Weiternutzung in anderen Planungsprojekten selektiert.

In einer bevorzugten Ausführungsform des erfindungsgemäßen Verfahrens beinhaltet der erste Eingangsdatensatz zumindest Topologieinformationen zur Verschaltung von Betriebsmitteln, und Datenkommunikationsinformationen der Betriebsmittel, und Parametrierungsinformationen der Betriebsmittel. Dies ist ein Vorteil, weil der erste Eingangsdatensatz damit hinreichend genau die Betriebsmittel und ihre Konfigurationen wiedergibt, um eine Weiternutzung in einem neu zu planenden Energieübertragungsnetz zu ermöglichen. Der erste Eingangsdatensatz kann bevorzugt aus einer Datenbank von Konfigurationen von Energienetzen bereitgestellt oder aus einem Planungswerkzeug wie dem eingangs erwähnten PSS SINCAL exportiert werden. Alternativ kann der Eingangsdatensatz auch manuell erstellt werden, was jedoch mit größerem Aufwand verbunden ist.

In einer weiteren bevorzugten Ausführungsform des erfindungsgemäßen Verfahrens wird als erster Eingangsdatensatz eine Beschreibung eines bereits installierten Energieübertragungsnetzes verwendet. Dies ist ein Vorteil, weil solche Energienetze mit ihren Konfigurationen bei Betreibern und Planern von Energienetzen in großer Zahl bereits vorliegen. Ferner ergibt sich der Vorteil, dass installierte Netze bereits erprobt sind, d.h. dass die verwendeten Konfigurationen im Alltagsbetrieb auf ihre Tauglichkeit untersucht wurden.

In einer weiteren bevorzugten Ausführungsform des erfindungsgemäßen Verfahrens wird für den ersten Eingangsdatensatz zumindest teilweise eine Beschreibung bereits bekannter typischer Konfigurationen verwendet. Dies ist ein Vorteil, weil mittels der bekannten typischen Konfigurationen Rechenaufwand bei der Umwandlung und bei den späteren Schritten des Verfahrens eingespart werden kann.

In einer weiteren bevorzugten Ausführungsform des erfindungsgemäßen Verfahrens wird als Auswahlkriterium mindestens eines der folgenden Kriterien verwendet: Größe des Musters im Hinblick auf die Anzahl enthaltener Betriebsmittel, Klassifizierung in interessante und triviale Muster und/oder Cluster, Zusammenfassbarkeit mit anderen typischen Konfigurationen. Der Einsatz eines oder mehrerer Auswahlkriterien hat den Vorteil, dass triviale Konfigurationen oder Ähnliches ausgeschlossen werden können. Ferner kann durch die Auswahlkriterien die Einhaltung von Randbedingungen sichergestellt werden.

In einer weiteren bevorzugten Ausführungsform des erfindungsgemäßen Verfahrens werden ermittelte typische Konfigurationen zur vereinfachten Planung und Inbetriebnahme eines Energieübertragungsnetzes verwendet. Dies ist ein Vorteil, weil das erfindungsgemäß geplante Energieübertragungsnetz nun mit vergleichsweise geringem Aufwand real gebaut werden kann.

In einer weiteren bevorzugten Ausführungsform des erfindungsgemäßen Verfahrens wird bei der vereinfachten Planung ein zweiter Eingangsdatensatz über ein zu planendes Energieübertragungsnetz bereitgestellt, und anhand der ausgewählten typischen Konfigurationen eine zweite graphische Repräsentation des zu planenden Energieübertragungsnetzes ermittelt, die Topologieinformationen zur Verschaltung von Betriebsmitteln, und Datenkommunikationsinformationen der Betriebsmittel und Parametrierungsinformationen der Betriebsmittel beinhaltet, wobei unterschiedliche Betriebsmitteltypen durch eine erste Kennzeichnung unterscheidbar sind, und elektrische Verbindungen durch eine zweite Kennzeichnung unterscheidbar sind, und Datenkommunikationsverbindungen durch eine dritte Kennzeichnung unterscheidbar sind, und die zweite graphische Repräsentation in einen Ausgangsdatensatz umgewandelt.

In einer weiteren bevorzugten Ausführungsform des erfindungsgemäßen Verfahrens werden Nutzerpräferenzen berücksichtigt. Dies ist ein Vorteil, weil Kundenwünsche und technische Randbedingungen noch besser eingehalten werden können.

In einer weiteren bevorzugten Ausführungsform des erfindungsgemäßen Verfahrens enthalten die Nutzerpräferenzen mindestens eine der folgenden Präferenzen:
- typische Konfigurationen, die durch einen Nutzer manuell erstellt wurden,
- eine Liste und/oder ein Ranking typischer Konfigurationen. Insbesondere ein Ranking typischer Konfigurationen ermöglicht es, bevorzugt nur bestimmte Konfigurationen oder bestimmte Konfigurationen mit hoher Position im Ranking häufiger als andere Konfigurationen zur Planung heranzuziehen.

In einer weiteren bevorzugten Ausführungsform des erfindungsgemäßen Verfahrens wird der Ausgangsdatensatz daraufhin geprüft, ob die Topologieinformationen, Datenkommunikationsinformationen und Parametrierungsinformationen geeignet sind, um das zu planende Energieübertragungsnetz zu konfigurieren. Es handelt sich z.B. um eine Simulation des geplanten Energieübertragungsnetzes bzw. des Ausgangsdatensatzes. Überprüft werden kann beispielsweise, ob im Normalbetrieb ein vorgegebenes Spannungsband bzw. eine vorgesehene Nennspannung usw. eingehalten werden können.

In einer weiteren bevorzugten Ausführungsform des erfindungsgemäßen Verfahrens wird für den Fall, dass kein geeigneter Ausgangsdatensatz ermittelt wird, ein neuer Ausgangsdatensatz unter Berücksichtigung einer einschränkenden Randbedingung ermittelt. Durch die Randbedingung wird der Suchraum für geeignete Konfigurationen verkleinert, was das automatisierte Auffinden einer Lösung erleichtert.

In einer weiteren bevorzugten Ausführungsform des erfindungsgemäßen Verfahrens werden für den Fall, dass mehrere Ausgangsdatensätze ermittelt werden, diese Ausgangsdatensätze anhand der Nutzerpräferenzen in eine Reihenfolge gebracht, so dass derjenige Ausgangsdatensatz ausgewählt wird, der den Nutzerpräferenzen am Besten entspricht. Dies ist ein Vorteil, weil eine Lösung ausgewählt wird, die am ehesten den Kundenerwartungen entspricht.

In einer weiteren bevorzugten Ausführungsform des erfindungsgemäßen Verfahrens wird für den Fall, dass kein Ausgangsdatensatz ermittelt wird, der das komplette zu planende Energieübertragungsnetz konfiguriert, eine Teillösung für den Ausgangsdatensatz bereitgestellt. Dies ist ein Vorteil, weil automatisiert zumindest ein Teilbereich des zu planenden Energieübertragungsnetzes geplant werden kann.

Ausgehend von bekannten Planungsanordnungen stellt sich an die Erfindung die Aufgabe, eine Planungsanordnung anzugeben, mit der eine Planung eines elektrischen Energieübertragungsnetzes mit vergleichsweise geringerem Aufwand und schneller durchgeführt wird.

Die Erfindung löst diese Aufgabe durch eine Planungsanordnung gemäß Anspruch 14. Eine bevorzugte Ausführungsform ergibt sich aus Anspruch 15. Es ergeben sich sinngemäß die gleichen Vorteile wie eingangs für das erfindungsgemäße Verfahren erläutert.

Ausgehend von bekannten Planungsanordnungen stellt sich an die Erfindung die Aufgabe, ein Computerprogrammprodukt anzugeben, mit dem eine Planung eines elektrischen Energieübertragungsnetzes mit vergleichsweise geringerem Aufwand und schneller durchführbar ist.

Die Erfindung löst diese Aufgabe durch eine Computerprogrammprodukt gemäß Anspruch 16. Es ergeben sich sinngemäß die gleichen Vorteile wie eingangs für das erfindungsgemäße Verfahren erläutert.

Zur besseren Erläuterung der Erfindung werden Ausführungsbeispiele anhand schematischer Darstellungen vorgestellt, dabei zeigen
- Figur 1: ein Beispiel für einen Eingangsdatensatz, und
- Figur 2: ein erstes Ausführungsbeispiel für eine Umwandlung eines Eingangsdatensatzes in eine graphische Repräsentation, und
- Figur 3: ein zweites Ausführungsbeispiel für ein automatisches Identifizieren von typischen Konfigurationen auf Basis eines Beispielnetzes, und
- Figur 4: ein drittes Ausführungsbeispiel für ein automatisches Identifizieren von typischen Konfigurationen auf Basis einer Vielzahl von Beispielnetzen, und
- Figur 5: ein viertes Ausführungsbeispiel für ein automatisches Optimieren eines Beispielsnetzes.

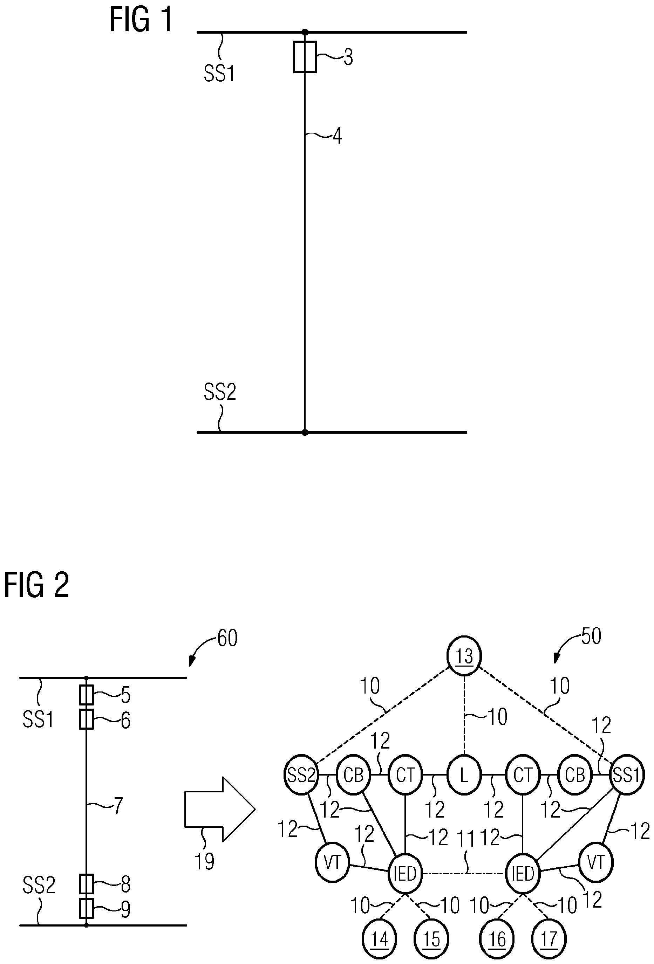

Die Figur 1 zeigt ein Beispiel für einen Eingangsdatensatz. Zwei Sammelschienen SS1,SS2 eines elektrischen Energieverteilungsnetzes sind als sog. "single-line-diagramm" dargestellt, also (unter Annahme symmetrisch belasteter Phasen) als einzelne Phase repräsentativ für alle drei Phasen. Die Sammelschienen SS1, SS2 sind durch eine Leitung 4 verbunden. An der Leitung 4 ist ein Terminal 3 vorgesehen, das einen Leistungsschalter (nicht dargestellt), einen Stromwandler und ein Schutzgerät aufweist.
Ferner sind im Eingangsdatensatz folgende Informationen hinterlegt:

**Primärtechnik**

| Topologie | |
|---|---|
| Spannungsebene | 20 kV |
| Frequenz | 50 Hz |
| Einspeisung | einseitig |
| Sternpunktbehandlung | gelöscht |

| Mengengerüst | |
|---|---|
| Leistungsschalter | 1 |
| Stromwandler | 1 |
| Spannungswandler | 0 |
| Leitungen | 1 |

**Sammelschienen**

| SS1 | |
|---|---|
| Bemessungs-Spannung | 24 kV |
| Netzebene | 20 kV |
| Bemessungs-Kurzzeit-Stehwechselspannungen | 50/60 kV |
| Bemessungs-Stehblitzstoßspannungen | 125/145 kV |
| Bemessungs-Betriebsstrom | 630 A |
| Bemessungs-Kurzzeitstrom | 20 kA |
| Bemessungs-Stoßstrom | 50 kA |

| SS2 | |
|---|---|
| Bemessungs-Spannung | 24 kV |
| Netzebene | 20 kV |
| Bemessungs-Kurzzeit-Stehwechselspannungen | 50/60 kV |
| Bemessungs-Stehblitzstoßspannungen | 125/145 kV |
| Bemessungs-Betriebsstrom | 630 A |
| Bemessungs-Kurzzeitstrom | 20 kA |
| Bemessungs-Stoßstrom | 50 kA |
| Spannungseben | 20 kV |
| Netzebene | 20 kV |

**Kabeldaten der Leitung 4**

| | |
|---|---|
| Typ | NA2YSY |
| Länge | 1 km |
| ParalleleSysteme | 1,0 |
| Widerstand | 0,3 Ohm/km |
| Reaktanz | 0,2 Ohm/km |
| Kapazität | 235,0 nF/km |

**Stromwandlerdaten Terminal 1**

| | |
|---|---|
| Wandler Strom | 3ph |
| Übersetzungsverhältnis | 300/1 A |
| Klasse | 5P |
| Nennüberstromziffer | 20 |
| Nennbürde | 2,5VA |

**Sekundärtechnik**

| Terminal 1 | |
|---|---|
| Zuordnung Primärtechnik | |
| Leistungsschalter | Terminal 1 Leitung |
| Stromwandler | Terminal 1 Leitung |

| 50/51 | |
|---|---|
| I>> | 2, 0 A |
| t>> | 0,5 s |
| I> | 1,5 A |
| t> | 0, 9 s |

Diese ausführlichen Informationen erlauben eine Beschreibung des real gebauten Beispielsnetzes in abstrakter Form.

Die Figur 2 zeigt ein erstes Ausführungsbeispiel für eine Umwandlung 19 eines Eingangsdatensatzes 60 in eine graphische Repräsentation 50. Der Eingangsdatensatz 60 ist im Beispiel vereinfacht und schematisiert dargestellt, nämlich als zwei Sammelschienen SS1, SS2, die durch eine Leitung 7 verbunden sind. Diese Darstellung entspricht wiederrum einem so genannten "Single Line" Diagramm, das ein Energieübertragungsnetz vereinfacht mit nur einer Phase darstellt. Für die Leitung 7 sind ähnlich wie im Beispiel zu Figur 1, detaillierte Parametrierungsinformationen hinterlegt. Die Leitung 7 hat im Beispiel eine Länge von 1 km, ein Widerstand von 0,3 Ohm/km, eine Reaktanz von 0,2 Ohm/km, und eine Kapazität von 235 nF/km.

Jeder Sammelschiene SS1, SS2 sind je zwei Schutzterminals bzw. Schutzgeräte 5, 6, 8, 9 zugeordnet. In ähnlicher Weise sind, wie im Beispiel gemäß Figur 2, zahlreiche weitere Informationen zu den Schutzgeräten, den installierten Betriebsmitteln, die an die Schutzgeräte angeschlossen sind, usw. hinterlegt. Diese Art der Darstellung des Eingangsdatensatzes 60 kann beispielsweise aus der eingangs erwähnten Software "PSS SINCAL" exportiert werden.

Es folgt ein Schritt zur Umwandung des Eingangsdatensatzes 60 in die graphische Repräsentation 50. Bei dem Umwandlungsschritt 19 werden die Daten im Eingangsdatensatz dahingehend analysiert, logische Zugehörigkeiten 10, elektrische Verbindungen 12 und Datenkommunikationsverbindungen 11 zu erkennen. Ferner werden in dem Eingangsdatensatz 60 die Sammelschienen SS1, SS2, die Leitung L sowie die weiteren angeschlossenen Betriebsmittel Leistungsschalter (Circuit Breaker CB), IED (Intelligent Electronic Device), Spannungswandler (Voltage Transformer VT), und Stromwandler (Current Transformer CT) identifiziert. In dem gezeigten Beispiel wird ferner festgestellt, dass den IEDs jeweils zugehörig zwei Funktionen erkannt werden können, die in der Darstellung mit den Bezugszeichen 14 bis 17 gekennzeichnet sind. Beispielsweise handelt es sich dabei um Interlocking Regeln oder dergleichen zur Funktionsweise des IED in Bezug auf seine Schutzgerätfunktion. Den Sammelschienen SS1, SS2 logisch übergeordnet ist die Spannungsebene des Energieübertragungsnetzes, die beispielsweise 20 kV beträgt. Weitere Beispiele für den IED zugeordneten Funktionen 14 bis 17 ist beispielsweise eine Distanzschutzfunktion oder eine Leistungsdifferentialschutzfunktion.

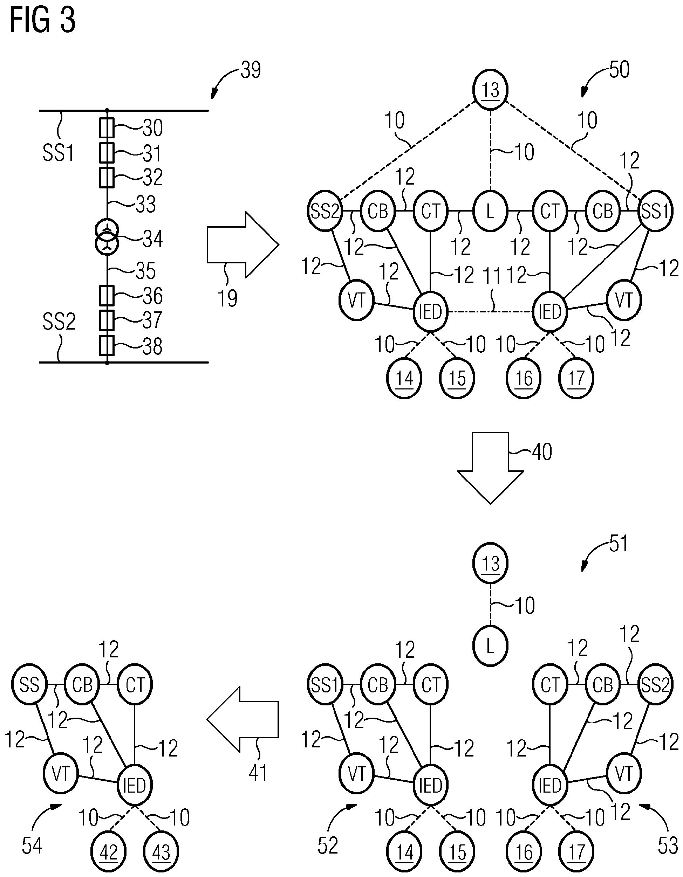

Die Figur 3 zeigt ein zweites Ausführungsbeispiel für ein automatisches Identifizieren von typischen Konfigurationen auf Basis eines Beispielnetzes. Als Eingangsdatensatz 39 wird ein neues Beispiel für ein Energieübertragungsnetz mit zwei Sammelschienen SS1, SS2, die durch eine Leitung 33, 35 und einen Transformator 34 verbunden sind, verwendet. Im Beispiel sind eine Reihe weiterer Betriebsmittel 30, 31, 33, 36, 37, 38 verschaltet. Im Eingangsdatensatz 39 sind, wie in den Beispielen zuvor, weitere Informationen zur Verschaltung der Betriebsmittel bzw. zur Topologie, zur Datenkommunikation zwischen Betriebsmitteln und zur Parametrierung der einzelnen Betriebsmittel 30, 31, 32, 35, 37, 38 vorgesehen. Der Eingangsdatensatz 39 wird in einem ersten Schritt 19 in eine graphische Repräsentation 50 umgewandelt. Diese entspricht zum vereinfachten Verständnis der graphischen Repräsentation gemäß Figur 2. In einem nächsten Schritt 40 wird die graphische Repräsentation 50 dahingehend bearbeitet, dass Muster in der graphischen Repräsentation erkannt werden. Insbesondere werden Muster identifiziert, die mehrfach auftreten. Im dargestellten Beispiel lässt sich die graphische Repräsentation 50 in drei Muster aufteilen, nämlich, dass die Leitung L zum Mittelspannungsnetz 13 logisch zugehörig ist, und zwei Kandidatenmuster 52, 53, die jeweils die den jeweiligen Sammelschienen SS1, SS2 zugeordneten Betriebsmittel separiert aufweisen. In einem weiteren Schritt 41 werden die Muster dahingehend analysiert, dass beide Muster sich als ein einzelnes Muster 54 beschreiben lassen, das der jeweiligen Sammelschiene zugeordnete Betriebsmittel aufweist. Mit anderen Worten erkannt das System automatisch, dass die beiden Kandidatenmuster 52, 53 spiegelsymmetrisch ausgebildet sind und sich nur dahingehend unterscheiden, dass eine andere Sammelschiene vorgesehen ist. Entsprechend kann automatisiert erkannt werden, dass sich in der graphischen Repräsentation 50 zweimal eine typische Konfiguration 54 verbirgt. Im dargestellten Beispiel kann als jeweilige Häufigkeit der Muster bereits ein einfaches einmaliges Vorkommen als Schwelle für die Bereitstellung eines Kandidatenmusters angegeben werden. Entsprechend wird auch das einmalig vorkommende Element 51 (die Leitung ist dem 20 kV Netz zugeordnet) bereits als Kandidatenmuster erkannt. Als Auswahlkriterium zur Identifizierung des schlussendlich als typische Konfiguration identifizierten Musters 54 eignet sich beispielsweise ein mehrfaches Vorkommen des Musters in der graphischen Repräsentation 50.

Kurz zusammengefasst sind in der Figur 3 mehrere Verfahrensschritte beschrieben, nämlich Umwandeln 19 des Eingangsdatensatzes 39 in eine graphische Repräsentation 50; des Weiteren Identifizieren 40 von mehrfach auftretenden Mustern in der graphischen Repräsentation und Ermitteln der jeweiligen Häufigkeit der Muster. Die Muster 51, 52, 53, deren jeweilige Häufigkeit einen vorher festgelegten Schwellenwert (in diesem Fall null) überschreitet, werden als Kandidatenmuster erkannt. Im letzten Schritt 41 werden typische Konfigurationen 54 aus den Kandidatenmustern 51, 52, 53 unter Berücksichtigung mindestens eines Auswahlkriteriums (mehrfaches Vorkommen des Kandidatenmusters in der graphischen Repräsentation 50) ausgewählt.

Die Muster innerhalb der graphischen Repräsentation 50 werden dabei anhand funktionaler Abhängigkeit zwischen Betriebsmitteln oder aufgrund einer engen Verbindungsanzahl innerhalb eines Clusters bzw. eines Musters erkannt. Mit anderen Worten werden vor allen Dingen solche Betriebsmittel zu einem Muster zusammengefasst, die viele Verbindungen untereinander (logisch, elektrisch oder per Kommunikation) aufweisen und nur wenige Verbindungen zu anderen Knoten im Graphen. Als Auswahlkriterium kommt des Weiteren noch eine Filterung nach Größe (Anzahl von Knoten und Kanten), eine Filterung isomorpher Kandidatenmuster (die Isomorphie von Graphen ist in der Graphentheorie die Eigenschaft zweier Graphen, strukturell gleich zu sein) oder eine Unterscheidung in triviale und komplexe Muster in Frage.

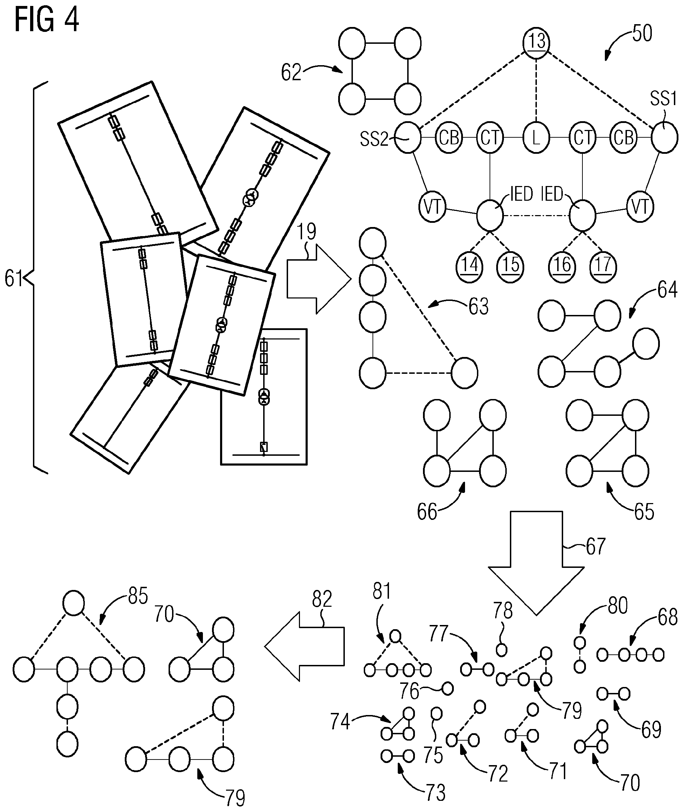

Die Figur 4 zeigt ein drittes Ausführungsbeispiel für ein automatisches Identifizieren von typischen Konfigurationen auf Basis eines Beispielnetzes. Aus einer Vielzahl unterschiedlicher Eingangsdatensätze bzw. Beschreibungen von Energieübertragungsnetzen 61 entsteht durch Umwandeln 19 in graphische Repräsentationen 50, 62, 63, 63, 65, 66 eine Sammlung unterschiedlicher graphischer Repräsentationen. Auch diese diverse Sammlung von graphischen Repräsentationen kann verwendet werden, um in einem Schritt 67 mehrfach auftretende Muster zu identifizieren. Es ergeben sich eine Reihe unterschiedlicher Kandidatenmuster 68-80, die nun wiederum mittels eines Auswahlschrittes 82 als Grundlage zur Auswahl von typischen Konfigurationen 85, 70, 79 dienen können. Anhand des hier verwendeten Auswahlkriteriums, beispielsweise eine Kombination von Häufigkeit und Komplexität, ergeben sich die drei identifizierten typischen Konfigurationen 70, 79, 85. Die typischen Konfigurationen 70, 79 sind dabei bereits im vorhergehenden Schritt als Kandidatenmuster erkannt worden. Das Muster 85 wurde durch einen Weiterverarbeitungsschritt im Rahmen der Auswahl 82 aus den Kandidatenmustern 81 und 80 durch Zusammenfassung gebildet. Eine solche Zusammenfassung von Kandidatenmustern zu neuen typischen Konfigurationen ist besonders vorteilhaft, um eine besonders große Bibliothek an typischen Konfigurationen zur Netzplanung bereitstellen zu können.

Bei der Figur 4 ist weiterhin anzumerken, dass für eine bessere Übersichtlichkeit die Bezeichnungen der Kanten sowie teilweise auch die Identifizierung der Knoten weggelassen wurden.

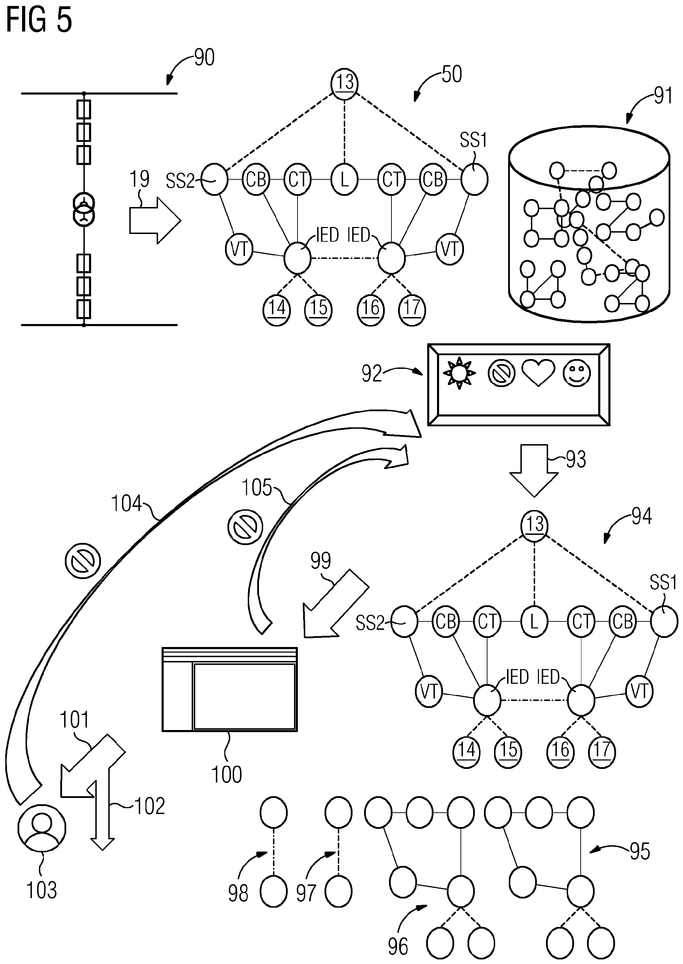

Die Figur 5 zeigt ein viertes Ausführungsbeispiel für ein automatisches Optimieren eines Beispielnetzes.

Ein erster Eingangsdatensatz 90 wird in einem Schritt 19 umgewandelt in eine grafische Repräsentation 50. Ferner liegt eine Datenbank 91 mit zahlreichen vorher bereits automatisch identifizierten oder manuell angegebenen typischen Konfigurationen bereit. Außerdem sind eine Reihe von Nutzerpräferenzen 92 (dargestellt durch die verschiedenen Symbole Sonne, Verbot, Herz, Smiley) in einer weiteren Datenbank bereitgestellt. Die Nutzerpräferenzen können beispielsweise eine Bevorzugung typischer Konfigurationen sein, insbesondere solcher Konfigurationen, die durch einen Nutzer manuell erstellt wurden oder eine Liste oder ein Ranking typischer Konfigurationen. Insbesondere kann mit einem Ranking bzw. einer Liste, welche Konfigurationen durch den Nutzer bevorzugt werden, die automatische Auswahl typischer Konfigurationen beeinflusst werden.

Ziel des Verfahrens gemäß der Figur 5 ist es, in einem Schritt 93 anhand der bekannten typischen Konfigurationen 91 und der Nutzerpräferenzen 92 eine zweite graphische Repräsentation 94 zu erstellen. Diese Repräsentation 94 ist aus den vorher bekannten typischen Konfigurationen 95, 96, 97, 98 (vereinfacht dargestellt) aus der Datenbank 91 zusammengefügt. Die neue graphische Repräsentation 94 weist durch die Verwendung bekannter und bereits erprobter typischer Konfigurationen 95, 96, 97, 98 eine optimierte Verschaltung, Parametrierung und Einrichtung von Kommunikationsverbindungen und damit z.B. eine höhere Stabilität als das ursprüngliche Energieübertragungsnetz gemäß dem Eingangsdatensatz 90 auf.

Um zu überprüfen, ob die aufgefundene Lösung der zweiten graphischen Repräsentation 94 wirklich den Anforderungen genügt und optimiert ist im Vergleich zum Eingangsdatensatz 90, wird in einem Schritt 99 eine Umwandlung der zweiten graphischen Repräsentation 94 in einen Ausgangsdatensatz vorgenommen. Der Ausgangsdatensatz wird mit einer Simulationssoftware 100, die beispielsweise Lastfluss- und Netzstabilitätsrechnungen durchführt, bewertet. Es können auch Schutzaspekte und Kurzschlusssimulationen durchgeführt werden. Wenn der Ausgangsdatensatz auf diese Weise mit der Simulationssoftware 100 als optimiert und einsatzbereit erkannt wurde, so ist das Verfahren z.B. an dieser Stelle beendet.

Zeigt die Simulation jedoch Probleme, wie beispielsweise ein nichtoptimales Kurzschlussverhalten oder Probleme im Lastfluss, auf, so wird die Lösung gemäß dem Ausgangsdatensatz bzw. der zweiten graphischen Repräsentation 94 verworfen und zurückverwiesen an den Schritt 93. Um Schritt 93 nun ein anderes und ggf. verbessertes Ergebnis gegenüber dem ersten Versuch zu erzielen, kann automatisiert oder seitens des Benutzers eine Veränderung der Benutzerpräferenzen vorgenommen werden. Eine automatisierte Änderung kann darin bestehen, in einem Ranking bevorzugter typischer Konfigurationen nun den nächsten Eintrag zu wählen und damit eine etwas abgewandelte zweite graphische Repräsentation 94 zu entwickeln.

Der Ausgangsdatensatz kann nach der Überprüfung mittels der Simulationssoftware 100 optional auch noch weiter verarbeitet werden in einem Schritt 101. Hierbei wird durch einen Nutzer eine manuelle Bewertung vorgenommen und ggf. in einem Schritt 102 der Ausgangsdatensatz zur Implementierung in einem Energieübertragungsnetz vorgesehen. Durch den Nutzer 103 kann der Ausgangsdatensatz jedoch auch verworfen und in einem Schritt 104 wiederum unter Veränderung der Präferenzen 92 ein neuer Versuch zur Optimierung mittels des Schrittes 93 unter Stellung einer neuen graphischen Repräsentation 94 vorgenommen werden.

Das hier gezeigte Verfahren gemäß der Figur 5 unterscheidet sich entsprechend von den vorher dargestellten Ausführungsbeispielen dadurch, dass auch ein bestehendes Energieübertragungsnetz gemäß dem Eingangsdatensatz 90 im laufenden Betrieb optimiert werden kann, indem z.B. mit dem Ausgangsdatensatz eine im Hinblick auf Verfügbarkeit und Zuverlässigkeit optimierte Schutzkonfiguration bereitgestellt wird.

## Patentansprüche

1. Verfahren zur Planung eines elektrischen Energieübertragungsnetzes mittels einer Planungsanordnung, **gekennzeichnet durch** die Schritte:
- Bereitstellen eines ersten Eingangsdatensatzes (39,60,61), und
- Umwandeln des ersten Eingangsdatensatzes (39,60,61) in eine graphische Repräsentation (50) mittels einer Umwandlungseinrichtung, wobei die graphische Repräsentation (50) Topologieinformationen zur Verschaltung von Betriebsmitteln (3,4,5,6,7,8,9,30-32,34,36-38), und Datenkommunikationsinformationen der Betriebsmittel (3,4,5,6,7,8,9,30-32,34,36-38) und Parametrierungsinformationen der Betriebsmittel (3,4,5,6,7,8,9,30-32,34,36-38) beinhaltet, wobei unterschiedliche Betriebsmitteltypen durch eine erste Kennzeichnung (SS1,SS2,CB,CT,VT,L,IED) unterscheidbar sind, und elektrische Verbindungen durch eine zweite Kennzeichnung (12) unterscheidbar sind, und
Datenkommunikationsverbindungen durch eine dritte Kennzeichnung (11) unterscheidbar sind,
- Identifizieren von mehrfach auftretenden Mustern (52,53, 69,70,71,72,74,77) in der graphischen Repräsentation (50) mittels einer Mustererkennungseinrichtung, und
- Ermitteln der jeweiligen Häufigkeit der Muster mittels der Mustererkennungseinrichtung, und
- Markieren aller Muster, deren jeweilige Häufigkeit einen vorher festgelegten Schwellenwert überschreitet, als Kandidatenmuster mittels der Mustererkennungseinrichtung, und
- Auswählen von typischen Konfigurationen (54,70,79,85) aus den Kandidatenmustern unter Berücksichtigung mindestens eines Auswahlkriteriums.

2. Verfahren nach Anspruch 1, **dadurch gekennzeichnet, dass** der erste Eingangsdatensatz (39,60,61) zumindest
- Topologieinformationen zur Verschaltung der Betriebsmittel (3,4,5,6,7,8,9,30-32,34,36-38), und
- Datenkommunikationsinformationen der Betriebsmittel(3,4,5,6,7,8,9,30-32,34,36-38), und
- Parametrierungsinformationen der Betriebsmittel (3,4,5,6,7,8,9,30-32,34,36-38) beinhaltet.

3. Verfahren nach Anspruch 1 oder 2, **dadurch gekennzeichnet, dass** als erster Eingangsdatensatz (39,60,61) eine Beschreibung eines bereits installierten Energieübertragungsnetzes verwendet wird.

4. Verfahren nach einem der vorhergehenden Ansprüche, **dadurch gekennzeichnet, dass** für den ersten Eingangsdatensatz zumindest teilweise eine Beschreibung bereits bekannter typischer Konfigurationen (64,65,66,67)) verwendet wird.

5. Verfahren nach einem der vorhergehenden Ansprüche, **dadurch gekennzeichnet, dass** als Auswahlkriterium mindestens eines der folgenden Kriterien verwendet wird: Größe des Musters im Hinblick auf die Anzahl enthaltener Betriebsmittel, Klassifizierung in interessante und triviale Muster und/oder Cluster, Zusammenfassbarkeit mit anderen typischen Konfigurationen.

6. Verfahren zur Planung eines elektrischen Energieübertragungsnetzes, **dadurch gekennzeichnet, dass** ermittelte typische Konfigurationen (54,70,79,85) zur vereinfachten Planung und Inbetriebnahme eines Energieübertragungsnetzes verwendet werden.

7. Verfahren nach Anspruch 6, **dadurch gekennzeichnet, dass** bei der vereinfachten Planung
- ein zweiter Eingangsdatensatz (90) über ein zu planendes Energieübertragungsnetz bereitgestellt wird, und
- anhand der ausgewählten typischen Konfigurationen eine zweite graphische Repräsentation (94) des zu planenden Energieübertragungsnetzes ermittelt wird, die Topologieinformationen zur Verschaltung von Betriebsmitteln, und Datenkommunikationsinformationen der Betriebsmittel und Parametrierungsinformationen der Betriebsmittel beinhaltet, wobei unterschiedliche Betriebsmitteltypen durch eine erste Kennzeichnung (SS1,SS2,CB,CT,VT,L,IED) unterscheidbar sind, und elektrische Verbindungen durch eine zweite Kennzeichnung (12) unterscheidbar sind, und
Datenkommunikationsverbindungen durch eine dritte Kennzeichnung (11) unterscheidbar sind, und
Umwandeln der zweiten graphischen Repräsentation (94) in einen Ausgangsdatensatz.

8. Verfahren nach Anspruch 6 oder 7, **dadurch gekennzeichnet, dass** Nutzerpräferenzen (92) berücksichtigt werden.

9. Verfahren nach einem der Ansprüche 6 bis 8, **dadurch gekennzeichnet, dass** die Nutzerpräferenzen (92) mindestens eine der folgenden Präferenzen enthalten:
- typische Konfigurationen, die durch einen Nutzer manuell erstellt wurden,
- eine Liste und/oder ein Ranking typischer Konfigurationen.

10. Verfahren nach einem der Ansprüche 6 bis 9, **dadurch gekennzeichnet, dass** der Ausgangsdatensatz daraufhin geprüft wird, ob die Topologieinformationen, Datenkommunikationsinformationen und Parametrierungsinformationen geeignet sind, um das zu planende Energieübertragungsnetz zu konfigurieren.

11. Verfahren nach Anspruch 10, **dadurch gekennzeichnet, dass** für den Fall, dass kein geeigneter Ausgangsdatensatz ermittelt wird, ein neuer Ausgangsdatensatz unter Berücksichtigung einer einschränkenden Randbedingung ermittelt wird.

12. Verfahren nach einem der Ansprüche 10 oder 11, **dadurch gekennzeichnet, dass** für den Fall, dass mehrere Ausgangsdatensätze ermittelt werden, diese Ausgangsdatensätze anhand der Nutzerpräferenzen in eine Reihenfolge gebracht werden, so dass derjenige Ausgangsdatensatz ausgewählt wird, der den Nutzerpräferenzen am Besten entspricht.

13. Verfahren nach einem der Ansprüche 7 bis 12, **dadurch gekennzeichnet, dass** für den Fall, dass kein Ausgangsdatensatz ermittelt wird, der das komplette zu planende Energieübertragungsnetz konfiguriert, eine Teillösung für den Ausgangsdatensatz bereitgestellt wird.

14. Planungsanordnung zur Planung eines elektrischen Energieübertragungsnetzes, aufweisend:
- eine Umwandlungseinrichtung, die ausgebildet ist, einen ersten Eingangsdatensatz (39,60,61) in eine graphische Repräsentation (50) umzuwandeln, die Topologieinformationen zur Verschaltung von Betriebsmitteln (3,4,5,6,7,8,9,30-32,34,36-38), und Datenkommunikationsinformationen der Betriebsmittel (3,4,5,6,7,8,9,30-32,34,36-38) und Parametrierungsinformationen der Betriebsmittel (3,4,5,6,7,8,9,30-32,34,36-38) beinhaltet, wobei
unterschiedliche Betriebsmitteltypen durch eine erste Kennzeichnung (SS1,SS2,CB,CT,VT,L,IED) unterscheidbar sind, und elektrische Verbindungen durch eine zweite Kennzeichnung (12) unterscheidbar sind, und
Datenkommunikationsverbindungen durch eine dritte Kennzeichnung (11) unterscheidbar sind, und
- eine Mustererkennungseinrichtung, die ausgebildet ist, mehrfach auftretende Muster (52,53, 69,70,71,72,74,77) in der graphischen Repräsentation (50) zu identifizieren, und
eine jeweilige Häufigkeit der Muster zu ermitteln, und
alle Muster, deren jeweilige Häufigkeit einen vorher festgelegten Schwellenwert überschreitet, als Kandidatenmuster zu markieren, und
- eine Auswahleinrichtung, die ausgebildet ist, typische Konfigurationen (54,70,79,85) aus den Kandidatenmustern unter Berücksichtigung mindestens eines Auswahlkriteriums auszuwählen.

15. Planungsanordnung nach Anspruch 14, **dadurch gekennzeichnet, dass** ein elektrisches Energieübertragungsnetz mit den ermittelten typische Konfigurationen vereinfacht in Betrieb genommen ist.

16. Computerprogrammprodukt, das auf einem dauerhaften Datenträger gespeichert ist und ausgebildet ist, bei Ausführung des Computerprogrammprodukts auf einer Planungsanordnung die Schritte eines Verfahrens gemäß einem der Ansprüche 1 bis 12 auszuführen.
